# FASCICULE DE BREVET EUROPEEN

(11) **EP 0 834 016 B1**
(45) Date de publication et mention de la délivrance du brevet: **28.08.2002**
(21) Numéro de dépôt: 97915513.2
(22) Date de dépôt: 18.03.1997
(51) Int. Cl.: F04C 15/00

(54) **DISPOSITIF D'ENTRAINEMENT ROTATIF ETANCHE A EXCENTRICITE, NOTAMMENT POUR POMPE VOLUMETRIQUE**
ABGEDICHTETE EXZENTERGETRIEBENE WELLE FÜR EINE VERDRÄNGERPUMPE
ECCENTRIC SEALED ROTARY DRIVE DEVICE, PARTICULARLY FOR A POSITIVE DISPLACEMENT PUMP

(30) Priorité: 22.03.1996 FR 9603588
(43) Date de publication de la demande: 08.04.1998
(73) Titulaire: Blackmer, 89000 Auxerre (FR)
(72) Inventeur: DELAISSE, Guy, F-89000 Auxerre (FR)
(74) Mandataire: Breese, Pierre
(86) Numéro de dépôt international: FR9700479
(87) Numéro de publication internationale: WO97036107

(56) Documents cités:
- FR-A- 1 596 943
- GB-A- 1 165 435
- US-A- 3 782 865

## Description

La présente invention concerne un dispositif d'entraînement rotatif étanche à excentricité, notamment pour pompe volumétrique, c'est-à-dire un dispositif d'entraînement permettant de transformer un mouvement de rotation en un mouvement orbital circulaire, tout en isolant avec une étanchéité absolue et durable les parties effectuant le mouvement orbital par rapport à celles effectuant le mouvement rotatif.

Un tel dispositif d'entraînement est déjà utilisé dans les pompes volumétriques à piston rotatif excentré et il sera décrit ci-après en se référant à une telle pompe, étant entendu que ce dispositif peut-être également utilisé, par exemple dans les pompes volumétriques à vis excentrée, ou même que ce dispositif peut être monté afin de constituer un ensemble d'entraînement destiné à transmettre un mouvement rotatif de façon complètement étanche.

Pour l'application du dispositif selon l'invention à l'entraînement d'une pompe volumétrique à piston excentré, on sait que, dans ce type de pompe, un piston circulaire effectue un mouvement orbital à l'intérieur d'un cylindre délimité par deux parois circulaires de diamètres différents. Le diamètre du piston est évidemment compris entre ces deux diamètres. Le cylindre est muni d'une paroi permettant d'isoler les chambres d'aspiration et de refoulement. La jupe du piston est interrompue au droit de cette paroi aussi appelée cloison.

Le centre du piston est animé d'un mouvement circulaire tandis que le piston ne tourne pas sur lui même, c'est-à-dire que les axes d'abscisse et d'ordonnée restent en permanence parallèles à leur orientation initiale.

Il est particulièrement intéressant de disposer un manchon étanche et non tournant, dénommé ci-après "manchette", autour de l'arbre et selon toute la longueur de ce dernier. L'avantage principal d'une telle pompe à piston rotatif à manchette étanche non tournante réside dans son étanchéité absolue, par opposition aux autres pompes rotatives qui nécessitent toujours un moyen d'étanchéité tournant (tresse, joint à lèvre ou garniture mécanique, par exemple).

Une autre solution à ce problème d'étanchéité en rotation consiste en un entraînement magnétique, mais ce dernier présente l'inconvénient de ne pas pouvoir s'appliquer à tous les produits devant être pompés et surtout d'être onéreux.

La solution utilisée jusqu'ici consistait à associer au piston excentré une manchette étanche en élastomère et munie à l'intérieur d'un complexe dispositif permettant d'assurer la transformation du mouvement de rotation en mouvement orbital.

Toutefois, outre la complexité du dispositif interne de la manchette, cette solution mettant en oeuvre une manchette en élastomère présente un certain nombre de limites relatives à :
- la tenue en température,
- la tenue mécanique,
- la résistance aux différences de pression,
- la compatibilité chimique avec certains produits,
- la conformité aux normes alimentaires.

On a donc tenté de réaliser une manchette en acier inoxydable. Toutefois, on sait que les soufflets et membranes en acier inoxydable peuvent absorber des déformations axiales et des déformations angulaires, mais sont très limités en ce qui concerne les déformations radiales.

Une solution similaire est connue du GB-A-1 165 435.

Or, le principe même de la pompe volumétrique à piston rotatif impose une déformation strictement radiale à une fréquence ou vitesse angulaire de l'ordre de 50 à 1000 tr/min.

La seule solution possible jusqu'ici aurait alors conduit à allonger considérablement le soufflet, ce qui était incompatible avec l'encombrement requis, les effets hydrodynamiques et la déformation due au poids même du soufflet.

Les recherches qui ont conduit à la présente invention permettent de remédier aux inconvénients précités et d'apporter une solution aux problèmes évoqués en fournissant un dispositif d'entraînement rotatif étanche à excentricité perfectionné utilisable dans une pompe volumétrique à piston rotatif.

De façon générale, conformément à l'invention, le dispositif d'entraînement rotatif étanche à excentricité, notamment pour pompe volumétrique, est du type comprenant un arbre comportant un tronçon d'entrée, supporté à rotation par un palier fixe et solidaire d'un moyen d'entraînement en rotation, et un tronçon de sortie, dont l'axe est parallèle et excentré selon une distance d par rapport à l'axe du tronçon d'entrée de manière à décrire un mouvement orbital circulaire autour dudit axe d'entrée lors de la rotation de l'arbre, et une manchette étanche et déformable, montée de façon étanche entre deux brides de support d'entrée et de sortie entourant respectivement à rotation les deux bouts d'arbre opposés d'entrée et de sortie.

Selon une caractéristique essentielle de l'invention, l'arbre comporte un tronçon intermédiaire incliné, qui est disposé entre les tronçons d'entrée et de sortie et dont l'axe fait un angle a avec les axes parallèles d'entrée et de sortie, la bride de support d'entrée est rendue solidaire du palier fixe et la bride de support de sortie est associée à une galette, qui ferme hermétiquement la manchette et dans laquelle est logé de façon borgne un roulement associé au tronçon de sortie, et la manchette non tournante est constituée de deux soufflets métalliques reliés de façon étanche par une bague de guidage montée à coulissement longitudinal sur le tronçon intermédiaire de l'arbre, de telle sorte que toute déformation radiale de cisaillement de la manchette non tournante est transformée en une simple déformation angulaire de compression-extension de chacun des deux soufflets, chaque directrice de chaque soufflet étant forcée d'effectuer un arc de cercle.

Selon d'autres caractéristiques de l'invention:
- les deux soufflets métalliques sont identiques, de préférence du type annelé ou à ondulations, et sont constitués par de l'acier inoxydable, la bague de guidage reliant les deux soufflets étant montée à coulissement lingitudinal par rapport à une bague de support fixée sur le tronçon intermédiaire incliné,
- la valeur optimale de l'angle a est étudiée pour que les axes respectifs des deux soufflets métalliques décrivent chacun, pendant la rotation de l'arbre coudé, un arc de cercle orthogonal aux faces terminales respectives de la manchette, lesdits arcs de cercles étant tangents entre eux au niveau des faces terminales situées de part et d'autre de la bague de raccordement et de guidage, lesdites faces terminales étant respectivement communes à ladite bague et aux deux soufflets,
- les points d'intersection respectifs entre les axes sont de préférence situés à mi-distance entre les deux faces terminales de chacun des manchons associés, de sorte que l'angle d'inclinaison a du tronçon intermédiaire de l'arbre est voisin de deux fois l'angle entre l'axe d'entrée et la direction générale du segment reliant le centre de la face terminale d'entrée et le centre de la face terminale de sortie de la manchette.

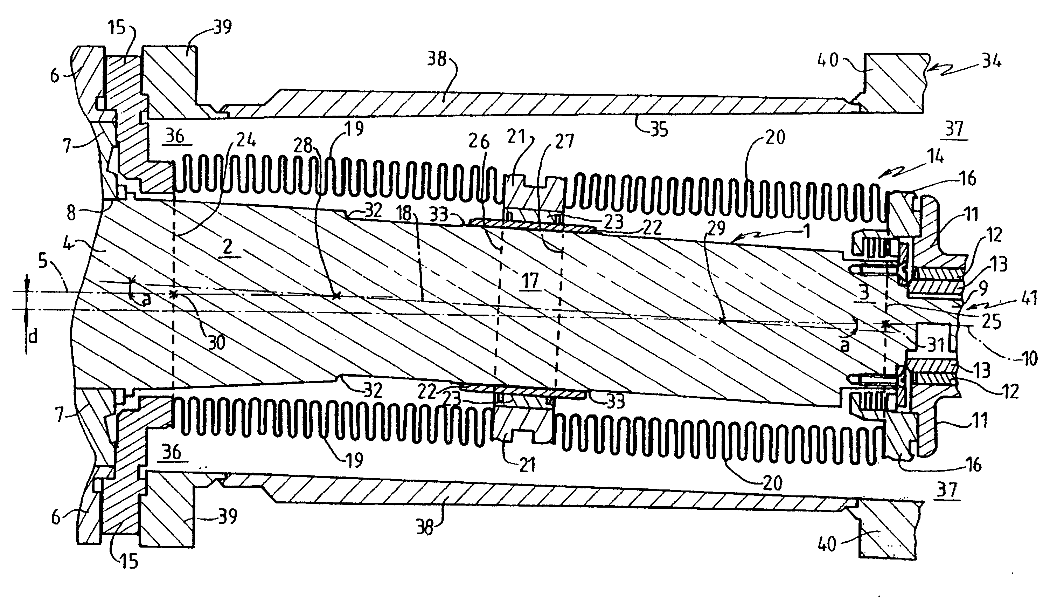

D'autres caractéristiques et avantages de l'invention ressortiront mieux de la description qui va suivre, faite en regard du dessin annexé sur lequel la figure unique représente une vue en coupe schématique partielle d'une forme de réalisation préférée d'un dispositif d'entraînement rotatif étanche à excentricité selon l'invention, utilisé à titre d'exemple dans une pompe volumétrique à piston rotatif excentré.

En se référant à la figure unique, celle-ci représente schématiquement un dispositif d'entraînement rotatif étanche à excentricité, qui est du type comprenant en premier lieu un arbre, désigné d'une façon générale par 1 et comportant essentiellement des tronçons d'entrée 2 et de sortie 3 à section droite circulaire.

Le tronçon d'entrée 2 présente un bout d'arbre 4 ayant un axe de rotation 5. Ce bout d'arbre 4 est solidaire d'un moyen d'entraînement en rotation non représenté et ayant généralement le même axe de rotation 5 que ledit tronçon d'entrée 2. En outre, le bout d'arbre 4 est supporté à rotation par un palier fixe 6, un roulement conique ou à rotule 7 étant disposé entre la portée 8 du bout d'arbre 4 et le palier fixe 6.

De la même manière, le tronçon de sortie 3 présente un bout d'arbre 9 ayant un axe de rotation 10, qui est parallèle et excentré selon une distance d par rapport à l'axe de rotation 5 du tronçon d'entrée 2 de manière à décrire un mouvement orbital circulaire autour dudit axe d'entrée 5 lors de la rotation de l'arbre 1. En outre, le bout d'arbre 9 est supporté à rotation par une galette 11 qui sera étudiée plus en détail ci-après, un roulement à rouleaux 12 étant disposé entre ladite galette 11 et un coussinet 13 entourant le bout d'arbre 9.

La pompe comprend en second lieu une manchette étanche et déformable, qui est désignée d'une façon générale par 14 et qui est montée de manière étanche entre des grande et petite brides de support, 15 et 16, entourant respectivement à rotation les deux bouts d'arbre opposés d'entrée 4 et de sortie 9 de l'arbre rotatif 1. Plus précisément, la grande bride 15 peut être maintenue à poste fixe, par exemple par des goujons périphériques, contre le palier fixe 6 du bout d'arbre d'entrée 4, tandis que la petite bride 16 peut également être maintenue, par exemple par des vis de blocage, contre la galette 11 fermant hermétiquement la manchette 14 et formant un logement borgne non représenté pour le roulement à rouleaux 12 supportant le coussinet 13 du bout d'arbre de sortie 9.

Selon une particularité essentielle de l'invention, l'arbre 1 comporte un tronçon intermédiaire incliné 17, qui est disposé entre les tronçons d'entrée 2 et de sortie 3 et dont l'axe 18 fait un angle a avec les axes d'entrée 5 et de sortie 10. En outre, la manchette 14 est constituée de deux soufflets métalliques 19 et 20, qui sont reliés de façon étanche par une bague de guidage 21 montée à coulissement longitudinal sur le tronçon intermédiaire 17 de l'arbre 1. Dans ces conditions, toute déformation radiale de cisaillement de la manchette 14 est transformée en une simple déformation angulaire de compression-extension de chacun des deux soufflets 19 et 20, chaque directrice de chaque soufflet 19 ou 20 étant forcée d'effectuer un arc de cercle.

Selon l'invention, les deux soufflets métalliques 19 et 20 sont généralement identiques et théoriquement interchangeables et sont du type annelé ou à ondulations. Ils sont constitués par de l'acier inoxydable dont la raideur est telle que la rotation de l'arbre 1 n'entraîne pas la galette terminale 11 de la manchette 14 dont seule la bride d'entrée 15 est fixe. De ce fait, il est possible de supprimer le dispositif interne complexe dont étaient obligatoirement munies les manchettes en élastomère pour assurer la transformation du mouvement de rotation en mouvement orbital.

En outre, la bague de guidage 21 reliant les deux soufflets métalliques 19 et 20 est montée à coulissement longitudinal par rapport à une bague de support 22 fixée sur le tronçon intermédiaire incliné 17, un roulement à aiguilles 23 pouvant être inséré entre la bague de support 22 et la bague de guidage 21.

Selon encore une autre particularité de l'invention, la valeur optimale de l'angle a est étudiée pour que les axes respectifs 5, 18 et 18, 10 des deux soufflets métalliques 19 et 20 décrivent chacun, pendant la rotation de l'arbre coudé 1, un arc de cercle orthogonal aux faces terminales respectives 24, 25 de la manchette 14, lesdits arcs de cercles étant tangents entre eux au niveau des faces terminales 26 et 27 situées de part et d'autre de la bague de raccordement et de guidage 21, lesdites faces terminales 26 et 27 étant respectivement communes à la bague 21 et aux deux soufflets 19 et 20.

Par ailleurs, également selon l'invention, les points d'intersection respectifs 28, 29 entre les axes 5, 18 et 10 sont de préférence situés à mi-distance entre les deux faces terminales 24, 26 et 27, 25 de chacun des manchons associés 19 et 20. Il en résulte que la valeur de l'angle d'inclinaison a du tronçon intermédiaire 17 de l'arbre 1 a approximativement deux fois la valeur de l'angle entre l'axe d'entrée 5 et la direction générale du segment non représenté reliant le centre 30 de la face terminale d'entrée 24 et le centre 31 de la face terminale de sortie 25 de la manchette 14.

A titre subsidiaire, le tronçon d'entrée 2 est de préférence faiblement conique et présente une diminution de diamètre depuis le bout d'arbre d'entrée 4, qui comporte une portée cylindrique 8 dont l'axe est l'axe d'entrée 5 de l'arbre 1, jusqu'à un congé 32 de raccordement avec le tronçon intermédiaire incliné 17, ce dernier présentant une section droite circulaire de diamètre généralement constant et s'étendant depuis le congé 32 de raccordement avec le tronçon d'entrée 2 et presque jusqu'à la zone du bout d'arbre de sortie 9, dont l'axe est l'axe de sortie 10 de l'arbre 1.

En outre, le tronçon intermédiaire incliné 17 comporte une zone 33 de diamètre légèrement augmenté, qui est située au niveau de la partie médiane entre les points d'intersection respectifs 28, 29 de l'axe incliné 18 du tronçon intermédiaire 17 avec les axes parallèles d'entrée 5 et de sortie 10 et qui forme une portée intermédiaire 33, sur laquelle est fixée la bague 22 de support de la bague de guidage 21 reliant les deux soufflets métalliques 19, 20 et montée à coulissement longitudinal par rapport à ladite bague de support 22.

Selon une utilisation possible de l'invention, en insérant de façon borgne un roulement dans l'extrémité 11 et en insérant dans ce roulement l'extrémité excentrée d'un vilebrequin (ou manivelle), on réalise un ensemble permettant de transmettre un mouvement de rotation de façon complètement étanche.

En se référant à nouveau à la figure unique, celle-ci représente schématiquement une utilisation préférée du dispositif d'entraînement selon l'invention dans une pompe volumétrique à piston rotatif excentré.

De façon connue en soi, une telle pompe comprend en premier lieu un cylindre fixe, qui est désigné d'une façon générale par 34, et en second lieu un piston rotatif excentré, qui d'une façon générale est monté sur l'extrémité de la manchette 14.

Plus précisément, le cylindre fixe 34 est constitué par un corps cylindrique fixe 38 monté entre deux supports annulaires fixes 39 et 40, le support 39 étant solidaire du palier fixe 6 supportant le tronçon d'entrée 2 de l'arbre 1 et le support 40 dudit corps 38 étant associé au cylindre 34 de la pompe, dont le piston est solidaire de la galette 11 fermant hermétiquement la manchette 14 et supportée par le bout d'arbre de sortie 9 à mouvement orbital circulaire.

Le produit à pomper, qui peut être un liquide fluide ou visqueux, est logé notamment entre la manchette non tournante 14 et la paroi intérieure 35 du cylindre fixe 34 et se déplace librement entre la zone d'admission 36 et la zone d'aspiration-refoulement 37.

La zone d'aspiration-refoulement 37 ou de pompage proprement dit est située au-delà de la galette 11 fermant hermétiquement la manchette 14 et comprend des chambres d'aspiration et de refoulement séparées par une paroi du cylindre 34, l'extrémité à mouvement orbital circulaire du piston excentré comportant une jupe qui est interrompue au droit de ladite paroi ou cloison, ces éléments connus n'étant pas représenté à des fins de clarté.

Comme indiqué précédemment, le dispositif d'entraînement selon l'invention est logé dans le corps cylindrique 38 de la pompe, la grande bride 15 de support de la manchette 14 pouvant être maintenue à poste fixe, par les goujons précités, entre le palier fixe 6 du bout d'arbre d'entrée 4 et le support annulaire 39 du cylindre 34.

Selon une autre utilisation possible de l'invention, le dispositif d'entraînement est monté dans une pompe volumétrique à vis excentrée, qui n'est pas représentée. Une telle pompe comprend généralement une vis hélicoïdale excentrée ou rotor, à une dent, tournant dans un stator hélicoïdal à deux dents, la rotation engendrant des volumes fermés qui se déplacent axialement de l'aspiration vers le refoulement. Dans ces conditions, le stator de la pompe est associé directement ou non au palier fixe 6 supportant le tronçon d'entrée 2 de l'arbre 1, tandis que la vis hélicoïdale rotorique excentrée est associée à la galette 11 et au bout d'arbre de sortie 9 à mouvement orbital circulaire.

Il est bien entendu que la présente invention n'a été décrite et représentée qu'à titre explicatif mais nullement limitatif et qu'on pourra y apporter toute modification utile, notamment dans le domaine des équivalences techniques, sans sortir de son cadre tel que défini dans les revendications.

## Revendications

1. Dispositif d'entraînement rotatif étanche à excentricité, notamment pour pompe volumétrique, du type comprenant un arbre (1) comportant un tronçon d'entrée (2), supporté à rotation par un palier fixe (6) et solidaire d'un moyen d'entraînement en rotation, et un tronçon de sortie (3), dont l'axe (10) est parallèle et excentré selon une distance d par rapport à l'axe (5) du tronçon d'entrée (2) de manière à décrire un mouvement orbital circulaire autour dudit axe d'entrée (2) lors de la rotation de l'arbre (1), et une manchette étanche et déformable (14), montée de façon étanche entre deux brides de support d'entrée (15) et de sortie (16) entourant respectivement à rotation les deux bouts d'arbre opposés d'entrée (4) et de sortie (9), **caractérisé par le fait que** l'arbre (1) comporte un tronçon intermédiaire incliné (17), qui est disposé entre les tronçons d'entrée (2) et de sortie (3) et dont l'axe (18) fait un angle a avec les axes parallèles d'entrée (5) et de sortie (10), que la bride de support d'entrée (15) est rendue solidaire du palier fixe (6) et la bride de support de sortie (16) est associée à une galette (11), qui ferme hermétiquement la manchette (14) et dans laquelle est logé de façon borgne un roulement (12) associé au tronçon de sortie (3), et que la manchette non tournante (14) est constituée de deux soufflets métalliques (19, 20) reliés de façon étanche par une bague de guidage (21) montée à coulissement longitudinal sur le tronçon intermédiaire (17) de l'arbre (1), de telle sorte que toute déformation radiale de cisaillement de la manchette non tournante (14) est transformée en une simple déformation angulaire de compression-extension de chacun des deux soufflets (19, 20), chaque directrice de chaque soufflet étant forcée d'effectuer un arc de cercle.

2. Dispositif suivant la revendications 1, **caractérisé par le fait que** les deux soufflets métalliques (19, 20) sont identiques, de préférence du type annelé ou à ondulations, et sont constitués par de l'acier inoxydable, la bague de guidage (21) reliant les deux soufflets étant montée à coulissement longitudinal par rapport à une bague de support (22) fixée sur le tronçon intermédiaire incliné (17).

3. Dispositif suivant l'une des revendications 1 ou 2, **caractérisé par le fait que** la valeur optimale de l'angle a est étudiée pour que les axes respectifs (5, 18 ; 18, 10) des deux soufflets métalliques (19, 20) décrivent chacun, pendant la rotation de l'arbre coudé (1), un arc de cercle orthogonal aux faces terminales respectives (24, 25) de la manchette (14), lesdits arcs de cercles étant tangents entre eux au niveau des faces terminales (26, 27) situées de part et d'autre de la bague de raccordement et de guidage (21), lesdites faces terminales (26, 27) étant respectivement communes à ladite bague (21) et aux deux soufflets (19, 20).

4. Dispositif suivant l'une quelconque des revendications 1 à 3, **caractérisé par le fait que** les points d'intersection respectifs (28, 29) entre les axes (5, 18, 10) sont de préférence situés à mi-distance entre les deux faces terminales (24, 26 ; 27, 25) de chacun des manchons associés (19, 20), de sorte que l'angle d'inclinaison a du tronçon intermédiaire (17) de l'arbre (1) est voisin de deux fois l'angle entre l'axe d'entrée (5) et la direction générale du segment reliant le centre (30) de la face terminale d'entrée (24) et le centre (31) de la face terminale de sortie (25) de la manchette (14).

5. Dispositif suivant l'une quelconque des revendications 1 à 4, **caractérisé par le fait que** le tronçon d'entrée (2) est faiblement conique et présente une diminution de diamètre depuis le bout d'arbre d'entrée (4), qui comporte une portée cylindrique (8) dont l'axe est l'axe d'entrée (5) de l'arbre (1), jusqu'à un congé (32) de raccordement avec le tronçon intermédiaire incliné (17), ce dernier présentant une section droite circulaire de diamètre généralement constant et s'étendant depuis le congé (32) de raccordement avec le tronçon d'entrée (2) et presque jusqu'à la zone du bout d'arbre de sortie (9), dont l'axe est l'axe de sortie (10) de l'arbre (1).

6. Dispositif suivant la revendication 5, **caractérisé par le fait que** le tronçon intermédiaire incliné (17) comporte une zone (33) de diamètre légèrement augmenté, qui est située au niveau de la partie médiane entre les points d'intersection respectifs (28, 29) de l'axe incliné (18) du tronçon intermédiaire (17) avec les axes parallèles d'entrée (5) et de sortie (10) et qui forme une portée intermédiaire (33), sur laquelle est fixée la bague (22) de support de la bague de guidage (21) reliant les deux soufflets métalliques (19, 20) et montée à coulissement longitudinal par rapport à ladite bague de support (22).

7. Ensemble d'entraînement utilisant un dispositif suivant l'une quelconque des revendications 1 à 6, **caractérisé par le fait qu'**un roulement est monté borgne vers l'extérieur dans la galette (11) et que l'extrémité excentrée d'un vilebrequin (ou manivelle) est insérée dans le roulement, grâce à quoi l'ensemble permet de transmettre un mouvement de rotation de façon complètement étanche.

8. Pompe volumétrique à piston excentré, utilisant un dispositif d'entraînement suivant l'une quelconque des revendications 1 à 6, **caractérisée par le fait que** ledit dispositif est logé dans un corps cylindrique fixe (38), le support (39) étant solidaire du palier fixe (6) supportant le tronçon d'entrée (2) de l'arbre (1), le support (40) dudit corps (38) étant associé au cylindre (34) de la pompe, dont le piston est solidaire de la galette (11) fermant hermétiquement la manchette (14) et supportée par le bout d'arbre de sortie (9) à mouvement orbital circulaire.

9. Pompe volumétrique à vis excentrée, utilisant un dispositif d'entraînement suivant l'une quelconque des revendications 1 à 6, **caractérisée par le fait que** le stator hélicoïdal de la pompe est associé au palier fixe supportant le tronçon d'entrée de l'arbre, tandis que la vis hélicoïdale rotorique est associée à la galette et au bout d'arbre de sortie à mouvement orbital circulaire.

## Patentansprüche

1. Drehantriebsvorrichtung dicht falls exzentrisch, die insbesondere für den Einsatz in einer Verdrängerpumpe bestimmt ist. Sie umfasst eine Welle (1) mit einem Eingangsabschnitt (2), der durch ein Festlager (6) drehgelagert ist und mit einem drehbaren Zugmittel fest verbunden ist sowie einen Ausgangsabschnitt (3), dessen Achse (10) parallel und exzentrisch mit einem Abstand d zur Achse (5) des Eingangsabschnitts (2) angeordnet ist und auf diese Weise bei Drehung der Welle (1) eine kreisförmige Orbitalbewegung um die genannte Eingangsachse (2) beschreibt. Außerdem umfasst die Vorrichtung eine dichte, elastische Manschette (14), die dicht zwischen zwei Eingangstragflanschen (15) und Ausgangstragflanschen (16) montiert ist, die im Falle einer Rotation die beiden sich gegenüberliegenden Eingangswellenenden (4) und Ausgangswellenenden (9) umgeben. Die Vorrichtung ist **dadurch gekennzeichnet, dass** die Welle (1) einen geneigten Zwischenabschnitt (17) umfasst, der zwischen den Eingangsabschnitten (2) und den Ausgangsabschnitten (3) angeordnet ist und dessen Achse (18) mit den parallelen Eingangsachsen (5) und Ausgangsachsen (10) einen Winkel a bildet. Der Eingangstragflansch (15) ist fest mit dem Festlager (6) verbunden und der Ausgangstragflansch (16) ist mit einer Scheibe (11) verbunden, die die Manschette (14) hermetisch verschließt. In der Scheibe befindet sich ein unsichtbar montiertes Wälzlager (12), das mit dem Ausgangsabschnitt (3) verbunden ist. Die nicht drehbare Manschette (14) besteht aus zwei Wellrohrfedern (19,20), die mit Hilfe eines Führungsringes (21) dicht verbunden sind. Der Führungsring (21) ermöglicht eine Hin- und Herbewegung in Längsrichtung und ist auf dem Zwischenabschnitt (17) der Welle (1) montiert, so dass jede radiale Verformung, die auf ein Abscheren der nicht drehbaren Manschette (14) zurückzuführen ist, in eine einfache Verdrehung mit Dynamikregelung der beiden Wellrohrfedern (19, 20) umgewandelt wird. Die Leitgerade jeder Feder bildet zwangsläufig einen Kreisbogen.

2. Vorrichtung gemäß dem Patentanspruch 1, **dadurch gekennzeichnet, dass** die beiden Wellrohrfedern (19, 20) identisch sind. Sie sind vorzugsweise genormt oder gewellt und werden aus Nirostastahl gefertigt. Der montierte Führungsring (21), der die beiden Federn verbindet, ermöglicht eine Hin- und Herbewegung in Längsrichtung in Bezug auf einen Tragring (22), der auf dem geneigten Zwischenabschnitt (17) befestigt ist.

3. Vorrichtung gemäß einem der Patentansprüche 1 oder 2, **dadurch gekennzeichnet, dass** der Optimalwert des Winkels a so gewählt wurde, dass die entsprechenden Achsen (5, 18; 18, 10) der beiden Wellrohrfedern (19, 20) während der Rotation der gekröpften Welle (1) jeweils einen Kreisbogen beschreiben, der ortogonal zu den entsprechenden Stirnflächen (24, 25) der Manschette (14) liegt. Die genannten Kreisbögen liegen im Bereich der Stirnflächen (26, 27), die sich auf der einen und anderen Seite des Verbindungs- und Führungsrings (21) befinden, tangential zueinander. Die genannten Stirnflächen (26, 27) gehören zu dem genannten Ring (21) und zu den beiden Wellrohrfedern (19, 20).

4. Vorrichtung gemäß einem der Patentansprüche 1 bis 3, **dadurch gekennzeichnet, dass** sich die entsprechenden Schnittpunkte (28, 29) zwischen den Achsen (5, 18, 10) befinden und zwar vorzugsweise mit halben Abstand zwischen den beiden Stirnflächen (24, 26; 27, 25) jeder verbundenen Buchse (19, 20), so dass der Neigungswinkel a des Zwischenabschnitts (17) der Welle (1) ungefähr zweimal so groß ist, wie der Winkel zwischen der Eingangsachse (5) und der Hauptrichtung des Kreisabschnitts, der den Mittelpunkt (30) der Eingangsstirnfläche (24) und den Mittelpunkt (31) der Ausgangsstirnfläche (25) der Manschette (14) verbindet.

5. Vorrichtung gemäß einem der Patentansprüche 1 bis 4, **dadurch gekennzeichnet, dass** der Eingangsabschnitt (2) leicht kegelförmig ist und einen kleineren Durchmesser hat und zwar vom Ende der Eingangswelle (4), die ein Zylinderlager (8) umfasst, dessen Achse die Eingangsachse (5) der Welle (1) ist, bis zu einer Auskehlung (32) zur Verbindung mit dem geneigten Zwischenabschnitt (17). Letzterer hat einen kreisförmigen Querschnitt mit einem relativ konstanten Durchmesser und erstreckt sich von der Auskehlung (32) zur Verbindung mit dem Eingangsabschnitt (2) fast bis zum Ende der Ausgangswelle (9), deren Achse die Ausgangsachse (10) der Welle (1) ist.

6. Vorrichtung gemäß dem Patentanspruch 5, **dadurch gekennzeichnet, dass** der geneigte Zwischenabschnitt (17) einen Bereich (33) mit einem geringfügig größeren Durchmesser umfasst, der sich im Bereich des Mittelteils befindet, zwischen den entsprechenden Schnittpunkten (28, 29) der geneigten Achse (18) des Mittelabschnitts (17) mit den parallelen Eingangsachsen (5) und Ausgangsachsen (10). Dieser Bereich bildet einen Zwischenzapfen (33), auf dem der Tragring (22) des Führungsrings (21) befestigt ist, der die beiden Wellrohrfedern (19, 20) verbindet und im Vergleich zum Tragring (22) eine Hin- und Herbewegung in Längsrichtung ermöglicht.

7. Antriebseinheit bei der eine Vorrichtung gemäß einem der Patentansprüche 1 bis 6 eingesetzt wird, **dadurch gekennzeichnet, dass** ein Wälzlager unsichtbar nach außen hin in der Scheibe (11) montiert wurde und dass das exzentrische Ende einer Kurbelwelle (oder Handkurbel) in das Lager eingesetzt wurde, mit dessen Hilfe die Antriebseinheit eine vollkommen dichte Übertragung der Drehbewegung ermöglicht.

8. Verdrängerpumpe mit exzentrisch angeordnetem Kolben, bei der eine Antriebsvorrichtung gemäß einem der Patentansprüche 1 bis 6, eingesetzt wird, **dadurch gekennzeichnet, dass** diese Vorrichtung in einem festen zylindrischem Körper (38) gelagert ist. Die Stütze (39) ist fest mit dem Festlager (6) verbunden, das den Eingangsabschnitt (2) der Welle (1) trägt. Die Stütze (40) dieses Körpers (38) ist mit dem Zylinder (34) der Pumpe verbunden, deren Kolben fest mit der Scheibe (11) verbunden ist, die die Manschette (14) hermetisch schließt und von dem Ende der Ausgangswelle (9) mit kreisförmiger Orbitalbewegung getragen wird.

9. Verdrängerpumpe mit Exzenterschnecke bei der eine Antriebsvorrichtung gemäß einem der Patentansprüche 1 bis 6, eingesetzt wird, **dadurch gekennzeichnet, dass** das schneckenförmige Leitrad der Pumpe mit dem Festlager verbunden ist, das den Eingangsabschnitt der Welle trägt, während die Rotorschnecke mit der Scheibe und mit dem Ende der Ausgangswelle mit kreisförmiger Orbitalbewegung verbunden ist.

## Claims

1. Sealed eccentric drive system, notably for a volumetric pump, including a shaft (1) containing a entry portion (2), supported at rotation by an entry fixed support (6) directly linked to a rotating drive system, and an exit shaft portion (3), with an axis (10) that is parallel and eccentric according to a distance d with respect to the axis (5) of the entry portion (2) so as to execute a circular orbital motion around said entry axis (2) at shaft rotation (1), and a flexible sealing protective bellows assembly (14), mounted in a sealed manner between two entry (15) and exit (16) support clamps, surrounding respectively at rotation the two opposing entry (4) and exit (9) shaft portions, **characterized by** the fact that the shaft (1) includes an inclined intermediate portion (17), which is placed between the entry (2) and exit (3) portions, and of which the axis (18) is at an angle a with the parallel entry (5) and exit (10) axes, that the entry support clamp (15) is interdependent of the fixed bearing (6) and the exit support clamp (16) is linked with a flange (11), that hermetically seals the protective bellows assembly (14) and in which a bearing is assembled in a blind hole (12) associated with the exit portion (3), and that the non-rotating protective boot assembly (14) is composed of two metallic protective bellows (19, 20) sealed together by a guiding ring (21) mounted so as to slide longitudinally on the intermediate portion (17) of the shaft (1), such that any shear radial deformation of the non-rotating protective boot assembly (14) is transformed into a simple angular compression-extension deformation of each of the two protective bellows (19, 20), each directrix of each protective bellows being forced to make a circular arc.

2. System according to claim 1, **characterized by** the fact that the two metallic protective bellows (19, 20) are identical, preferably of a ringed or undulated type, and are made of stainless steel, the guiding ring (21) linking the two protective bellows is mounted so as to slide longitudinally with respect to a support bushing (22) affixed on the inclined intermediate portion (17).

3. System according to one of claims 1 or 2, **characterized by** the fact that the optimal value of angle a is studied so that the respective axes (5, 18; 18, 10) of the two metallic protective bellows (19, 20) each follow, during the rotation of the cranked portion of the shaft (1), a circular arc orthogonal to the respective terminal faces (24, 25) of the boot assembly (14), said circular arcs being tangent to each other at the terminal faces (26, 27) located at each end of part of the guiding and connecting ring (21), said terminal faces (26, 27) being respectively common to said ring (21) and to the two protective bellows (19, 20).

4. System according to any of claims 1 to 3, **characterized by** the fact that the respective intersection points (28, 29) between the axes (5, 18, 10) are preferably located midway between the two terminal faces (24, 26; 27, 25) of each associated boot (19, 20), such that the gradient angle a of the intermediate portion (17) of the shaft (1) is nearly twice the angle between the entry axis (5) and the general direction of the portion linking the center (30) of the entry terminal face (24) and the center (31) of the exit terminal face (25) of the boot assembly (14).

5. System according to any of claims 1 to 4, **characterized by** the fact that the entry shaft portion (2) is slightly conical and presents a reduction in diameter from the end of the entry shaft (4), which includes a cylindrical support (8) of which the axis is the entry axis (5) of the shaft (1), up to a fillet (32) with the inclined intermediate portion (17), the latter presenting a circular straight section of a generally constant diameter, and starting from the fillet (32) with the entry shaft portion (2) almost to the exit shaft end zone (9) of which the axis is the exit axis (10) of the shaft (1).

6. System according to claim 5, **characterized by** the fact that the inclined intermediate portion (17) includes a slightly increased diameter zone (33), situated at the median section between the respective intersection points (28, 29) of the inclined axis (18) of the intermediate portion (17) with the parallel entry (5) and exit (10) axes and forming an intermediate support (33), on which is attached the support bushing (22) of the guiding ring (21) linking the two protective metallic bellows (19, 20) and mounted so as to slide longitudinally with respect to said support bushing (22).

7. Drive system using a mechanism according to any one of claims 1 to 6, **characterized by** the fact that a bearing is mounted at the edge of a blind hole in the flange (11) and that the eccentric extremity of a crank shaft (or crank) is inserted into the bearing, so that the assembly allows transfer of a completely sealed rotation.

8. Volumetric pump with eccentric piston, using a drive system according to any one of claims 1 to 6, **characterized by** the fact that said system is housed in a fixed cylindrical housing (38), the support (39) being interdependent of fixed bearing (6) supporting the entry portion (2) of the shaft (1), the support (40) of said housing (38) being linked with the pump cylinder (34), of which the piston is interdependent of the flange (11) hermetically sealing the boot assembly (14) and supported by the end of the exit shaft (9) with a circular orbital motion.

9. Eccentric screw volumetric pump, using a drive system according to any one of claims 1 to 6, **characterized by** the fact that the pump's helicoidal stator is linked to a fixed bearing supporting the entry shaft portion, whereas the helicoidal screw rotor is linked with the flange and with the end of the circular orbital motion exit shaft.
